# EUROPEAN PATENT SPECIFICATION

(11) **EP 4 590 594 B1**
(45) Date of publication and mention of the grant of the patent: **09.09.2026**
(21) Application number: 23783717.4
(22) Date of filing: 20.09.2023
(51) Int. Cl.: B29C 51/00, B29C 51/16, B29C 45/00, B29K 67/00

(54) **MOULDED ITEMS INCLUDING A BARRIER LABEL**
FORMTEILE MIT EINEM BARRIERE-ETIKETT
ARTICLES MOULÉS COMPRENANT UNE ÉTIQUETTE BARRIÈRE

(30) Priority: 22.09.2022 IT 202200019482
(43) Date of publication of application: 30.07.2025
(73) Proprietor: Novamont S.p.A., 28100 Novara (IT)
(72) Inventor: RALLIS, Angelo, 28100 Novara (IT); ANASTASIO, Rosaria, 20002 OSSONA (MI) (IT); GESTI GARCIA, Sebastià, 10100 Torino (IT); BASTIOLI, Catia, 28100 Novara (IT)
(74) Representative: Zanoli, Enrico
(86) International application number: PCT/EP2023/075952
(87) International publication number: WO 2024/061973

(56) References cited:
- WO-A1-2019/002780
- WO-A1-2021/023763
- FR-A1- 2 947 205

## Description

The present invention relates to a biodegradable moulded or thermoformed article for food packaging comprising a label with volatile substance and gas barrier properties.

In the food packaging sector, one of the major challenges is to ensure very good mechanical properties and low deformability, especially for applications involving high temperatures during use such as cutlery, plates, capsules or containers.

Diacid-diol polyesters are extensively used in this sector on account of their excellent mechanical and processing properties, coupled with the possibility of obtaining biodegradable products.

However, some volatile substances may be formed as by-products in the course of the synthesis of the above, which includes a condensation reaction between diols and diacids or their derivatives. In the case of diacid-diol polyesters derived from 1,4-butanediol, possible by-products may be tetrahydrofuran (THF) and butenol (BOL), resulting from the following reactions:
- dehydration of 1,4-butanediol during synthesis of the polyester

   O(CH₂)₄ OH → THF + H₂O

   O(CH₂)₄ OH → BOL + H₂O
- degradation of the terminal hydroxybutyl groups formed during synthesis of the polyester itself ('backbiting' reaction)

   polyester-C(O)O(CH₂)₄OH → THF + polyester-C(O)OH

Because such volatile substances are present as by-products, the direct use of these materials in applications in contact with food must meet specific migration limits. In this respect, for example, Commission Regulation (EU) No. 10/2011 of 14 January 2011 on plastics materials and articles intended to come into contact with foodstuffs stipulates a specific migration limit of 0.6 mg/kg_{food} of THF from packaging to food.

Food packaging applications also require low permeability to gases, in particular oxygen, carbon dioxide and water vapour, to preserve the organoleptic properties of the food and ensure that it is conserved.

WO 2017/148931 A1 describes a process for the pre-treatment of polyesters to remove THF, but this does not ensure that other volatiles are removed or that gas barrier properties are imparted to the polyester undergoing the process described.

Thus, in order to make use of such polyesters in food packaging applications they must be combined with barriers to volatiles and gases, but without affecting the mechanical properties and biodegradability of the final product.

WO 2019/002780, for example, describes biodegradable articles for food packaging comprising a biodegradable support on which a biodegradable film is adhered by in-mould labelling.

With this problem as a starting point, it has now surprisingly been found that it is possible to obtain a biodegradable moulded or thermoformed article for food packaging having improved barrier properties.

In particular, the object of the present invention is a biodegradable moulded or thermoformed article for food packaging comprising a body and a barrier label in which:
i. the body comprises at least one biodegradable diacid-diol polyester including 1,4-butylene dicarboxylate units;
ii. the barrier label comprises at least one biodegradable support consisting of a mixture comprising a polyhydroxyalkanoate and at least one aliphatic and/or aliphatic-aromatic polyester, and at least one coating layer;
in which said label (ii) is caused to adhere to the body (i) through an *in-mould labelling* process for the part in contact with food. When so positioned, said label (ii) confers a higher barrier to THF permeation towards the food upon said article than when the label is not present, advantageously more than twice, preferably more than 5 times, more preferably more than 10 times, even more preferably more than 15 times and up to 100 times, for example 50 times, more than when the label is not present.

In a moulded or thermoformed article for food packaging, typically a fraction of the THF contained in the body diffuses internally to the food and the other fraction of the THF diffuses outwards the article, away from the food.

For the evaluation of THF permeation barrier effect towards the food of the barrier label (ii), an experimental method that allows to migrate all the THF contained in the body exclusively to the food can advantageously be used, in order to consider the worst case.

For example, a source of THF (such as granules of poly(1,4-butylene succinate)) is introduced in a sealed bag made of the barrier label (ii). The sealed bag is placed in an aluminium sachet containing food, e.g. a commercial mixture of ground roasted coffee for Espresso coffee machine for home use.

As a comparison, the same amount of the source of THF is dispersed in an aluminium sachet containing said commercial mixture of ground roasted coffee in the absence of the sealed bag made of the barrier label (ii).

In both cases, the weight ratio between the source of THF and the coffee powder is 0.3.

After conditioning the aluminium sachets in an oven at T=60°C for 10 days, the quantity of THF migrated into the coffee powder is determined to evaluate the barrier properties of the label against THF and compared to the quantity of THF migrated into the coffee powder in the absence of the sealed bag made of the barrier label (ii).

For example, the THF content of an aliquot of 4-6 g of the coffee powder sample recovered from the aluminium sachet is measured as described in WO 2017/148931 A1.

The biodegradable moulded or thermoformed article according to the present invention finds use among plates, cups, rigid containers, beverage dispensing capsules, caps, lids, and food containers that can be heated in conventional and microwave ovens. Preferably the biodegradable moulded or thermoformed article according to the present invention finds use in beverage dispensing capsules, preferably for hot beverages.

The biodegradable moulded or thermoformed article according to the present invention is biodegradable according to standard EN 13432. Preferably the biodegradable moulded or thermoformed article according to the present invention is biodegradable in industrial composting according to standard EN 13432. According to another aspect of the present invention the biodegradable moulded or thermoformed article according to the present invention is biodegradable in home composting according to standard EN 11355.

The biodegradable moulded or thermoformed article according to the present invention may be obtained by injection moulding, blow moulding, compression moulding and thermoforming. Preferably, the biodegradable moulded or thermoformed article according to the present invention is obtained by injection moulding.

The biodegradable moulded or thermoformed article according to the present invention comprises a body (i) and a barrier label (ii), in which said label (ii) is caused to adhere to body (i) by means of an *in-mould labelling* process for the part in contact with food. In a preferred embodiment the biodegradable moulded or thermoformed article according to the present invention comprises a body (i) and a barrier label (ii), in which said label (ii) is caused to adhere to body (i) by means of an in-mould *labelling process* for the part in contact with food.

In a further preferred embodiment, the biodegradable moulded or thermoformed article according to the present invention comprises a body (i) and two barrier labels (ii), in which one of the two labels (ii) is caused to adhere to body (i) by means of an *in-mould labelling process* for the part in contact with food, and the other label (ii) is caused to adhere to body (i) by an *in-mould labelling* process for the outer part.

Label (ii) may be caused to adhere to body (i) from the coating side or from the support side. Preferably, label (ii) is caused to adhere to body (i) from the support side.

*In-mould labelling* (IML) or *in-mould decoration* refers to the use of labels during the production of moulded or thermoformed articles. By means of *in-mould labelling,* the label becomes an integral part of the moulded or thermoformed article, avoiding undesirable effects such as peeling or delamination, with a consequent risk that the label may be removed from the body.

Label (ii) is caused to adhere to the part of body (i) of the moulded article according to the invention which is in contact with food. The label, of sufficient size to cover the entire inner surface of the moulded article, is placed on the male shell of the mould, and incorporated with injection of the composition of molten body (i) through the effect of the high pressure exerted on the surface.

Body (i) of the biodegradable moulded or thermoformed article according to the present invention comprises at least one diacid-diol polyester comprising 1,4-butylene dicarboxylate units. The diacid-diol polyester comprising 1,4-butylene dicarboxylate units is obtained by condensing 1,4-butanediol with at least one diacid, an ester or salt thereof. The diacid-diol polyester comprising 1,4-butylene dicarboxylate units is selected from aliphatic and aliphatic-aromatic polyesters.

In the case of an aliphatic-aromatic polyester, this preferably comprises:
(a) a dicarboxylic component comprising, with respect to the total dicarboxylic component:
   a1) 30-70% in moles, preferably 40-60% in moles, of units derived from at least one aromatic dicarboxylic acid;
   a2) 70-30% in moles, preferably 60-40% in moles, of units derived from at least one saturated aliphatic dicarboxylic acid;
   a3) 0-5% in moles of units derived from at least one unsaturated aliphatic dicarboxylic acid;
b) a diol component comprising, with respect to the total diol component:
   (b1) 95-100% in moles, preferably 97-100% in moles, of units derived from 1,4-butanediol;
   b2) 0-5% in moles, preferably 0-3% in moles, of units derived from another saturated aliphatic diol other than b1);
   b3) 0-5% in moles, preferably 0-3% in moles, of units derived from an unsaturated aliphatic diol.

The aromatic dicarboxylic acids of component a1 are preferably selected from aromatic dicarboxylic acids of the phthalic acid type, preferably terephthalic acid or isophthalic acid, more preferably terephthalic acid, and heterocyclic aromatic dicarboxylic compounds, preferably 2, 5-furandicarboxylic acid, 2,4-furandicarboxylic acid, 2,3-furandicarboxylic acid, 3,4-furandicarboxylic acid, more preferably 2,5-furandicarboxylic acid, their esters, salts and mixtures thereof.

In a preferred embodiment, said aromatic dicarboxylic acids comprise:
- 1 to 99% in moles, preferably 5 to 95% and more preferably 10 to 80%, of terephthalic acid, its esters or salts;
- 99 to 1% in moles, preferably 95 to 5% and more preferably 90 to 20%, of 2,5-furandicarboxylic acid, its esters or salts.

The saturated aliphatic dicarboxylic acids of component a2 are preferably selected from C2-C24, preferably C4-C13, more preferably C4-C11, saturated aliphatic dicarboxylic acids, their C1-C24, more preferably C1-C4, alkyl esters, their salts and mixtures thereof. Preferably, the saturated aliphatic dicarboxylic acids are selected from: succinic acid, 2-ethylsuccinic acid, glutaric acid, 2-methylglutaric acid, adipic acid, pimelic acid, suberic acid, azelaic acid, sebacic acid, undecanedioic acid, dodecanedioic acid, brassylic acid and their C1-C24 alkyl esters. In a preferred embodiment of the present invention the saturated aliphatic dicarboxylic acids comprise succinic acid, adipic acid, azelaic acid, sebacic acid and mixtures thereof.

The unsaturated aliphatic dicarboxylic acids of component a3 are preferably selected from itaconic acid, fumaric acid, 4-methylene-pimelic acid, 3,4-bis(methylene) nonanedioic acid, 5-methylene-nonanedioic acid, their C1-C24, preferably C1-C4, alkyl esters, their salts and mixtures thereof. In a preferred embodiment of the present invention, the unsaturated aliphatic dicarboxylic acids comprise mixtures comprising at least 50% in moles, preferably more than 60% in moles, more preferably more than 65% in moles of itaconic acid, its C1-C24, preferably C1-C4, esters. More preferably, the unsaturated aliphatic dicarboxylic acids comprise itaconic acid.

As for the saturated aliphatic diols of component b2, these are preferably selected from 1,2-ethanediol, 1,2-propanediol, 1,3-propanediol, 1,5-pentanediol, 1,6-hexanediol, 1,7-heptanediol, 1,8-octanediol, 1,9-nonanediol, 1,10-decanediol, 1,11-undecanediol, 1,12-dodecanediol, 1,13-tridecanediol, 1,4-cyclohexanedimethanol, neopentylglycol, 2-methyl-1,3-propanediol, dianhydrosorbitol, dianhydromannitol, dianhydroiditol, cyclohexanediol, dialkylene glycols and polyalkylene glycols having molecular weights of 100-4000 such as polyethylene glycol, polypropylene glycol and their mixtures.

With regard to the unsaturated aliphatic diols of components b3, these are preferably selected *from cis* 2-buten-1,4-diol, *trans* 2-buten-1,4-diol, 2-butyn-1,4-diol, *cis* 2-penten-15-diol, *trans* 2-penten-1,5-diol, 2-pentyn-1,5-diol, *cis* 2-hexen-1,6-diol, *trans* 2-hexen-1,6-diol, 2-hexen-1,6-diol, *cis* 3-hexen-1,6-diol, *trans* 3-hexen-1,6-diol, 3-hexen-1,6-diol.

Preferably, diol component b comprises one or more diols selected from 1,2-ethanediol and 1,3-propanediol, in addition to 1,4-butanediol. More preferably, the diol component comprises 1,4-butanediol.

In the case of an aliphatic polyester, this preferably comprises:
c) a dicarboxylic component comprising, with respect to the total dicarboxylic component
   (c1) 95-100% in moles of units derived from at least one aliphatic dicarboxylic acid;
   (c2) 0-5% in moles of units derived from at least one unsaturated aliphatic dicarboxylic acid;
d) a diol component comprising, with respect to the total diol component:
   d1) 95-100% in moles, preferably 97-100% in moles, of units derived from 1,4-butanediol;
   d2) 0-5% in moles, preferably 0-3% in moles, of units derived from an additional saturated aliphatic diol other than b1);
   d3) 0-5% in moles, preferably 0-3% in moles, of units derived from an unsaturated aliphatic diol.

The saturated aliphatic dicarboxylic acids in component c1 are preferably selected from saturated C2-C24, preferably C4-C13, more preferably C4-C11, dicarboxylic acids, their C1-C24, preferably C1-C4, alkyl esters, their salts and mixtures thereof. Preferably the saturated aliphatic dicarboxylic acids are selected from succinic acid, 2-ethylsuccinic acid, glutaric acid, 2-methylglutaric acid, adipic acid, pimelic acid, suberic acid, azelaic acid, sebacic acid, undecanedioic acid, dodecanedioic acid, brassylic acid, hexadecanedioic acid, octadecanedioic acid and their C1-C24 alkyl esters.

The unsaturated aliphatic dicarboxylic acids in component c2 are preferably selected from itaconic acid, fumaric acid, 4-methyl-pimelic acid, 3,4-bis (methylene) nonanedioic acid, 5-methylene-nonanedioic acid, their C1-C24, preferably C1-C4, alkyl esters, their salts and mixtures thereof. In a preferred embodiment of the present invention, the unsaturated aliphatic dicarboxylic acids comprise mixtures comprising at least 50% in moles, preferably more than 60% in moles, more preferably more than 65% in moles, of itaconic acid and its C1-C24, preferably C1-C4, esters. More preferably the unsaturated aliphatic dicarboxylic acids comprise itaconic acid.

With regard to the saturated aliphatic diols in component d2, these are preferably selected from 1,2-ethanediol, 1,2-propanediol, 1,3-propanediol, 1,5-pentanediol, 1,6-hexanediol, 1,7-heptanediol, 1,8-octanediol, 1,9-nonanediol, 1,10-decanediol, 1,11-undecanediol, 1,12-dodecanediol, 1,13-tridecanediol, 1,4-cyclohexanedimethanol, neopentylglycol, 2-methyl-1,3-propanediol, dianhydrosorbitol, dianhydromannitol, dianhydroiditol, cyclohexanediol, dialkylene glycols and polyalkylene glycols having a molecular weight of 100-4000, such as polyethylene glycol, polypropylene glycols and mixtures thereof.

With regard to the unsaturated aliphatic diols in component d3, these are preferably selected from *cis* 2-buten-1,4-diol, *trans* 2-buten-1,4-diol, 2-butyn-1,4-diol, *cis* 2-penten-15-diol, *trans* 2-penten-1,5-diol, 2-pentyn-1,5-diol, *cis* 2-hexen-1,6-diol, *trans* 2-hexen-1,6-diol, 2-hexyn-1,6-diol, *cis* 3-hexen-1,6-diol, trans 3-hexen-1,6-diol, 3-hexyn-1,6-diol.

Preferably, diol component d comprises one or more diols selected from 1,2-ethanediol and 1,3-propanediol, in addition to 1,4-butanediol. More preferably the diol component comprises 1,4-butanediol.

In a preferred embodiment the diacid-diol polyesters comprising 1,4-butylene dicarboxylate units are preferably selected from the group comprising: poly(1,4-butylene succinate), poly(1,4-butylene adipate), poly(1,4-butylene azelate), poly(1,4-butylene sebacate), poly(1,4-butylene brassylate), poly(1,4-butylene azelate-co-1,4-butylene succinate), poly(1,4-butylene adipate-co-1,4-butylene succinate), poly(1,4-butylene adipate-co-1,4-butylene 2,5-furandicarboxylate), poly(1,4-butylene sebacate-co-1,4-butylene-2,5-furandicarboxylate), poly(1,4-butylene azelate-co-1,4-butylene 2,5-furandicarboxylate), poly(1,4-butylene brassylate-co-1,4-butylene 2,5-furandicarboxylate), poly(1,4-butylene succinate-co-1,4-butylene 2,5-furandicarboxylate), poly(1,2-ethylene adipate-co-1,4-butylene-2,5-furandicarboxylate), poly(1,2-ethylene sebacate-co-1,4-butylene 2,5-furandicarboxylate), poly(1,2-ethylene azelate-co-1,4-butylene 2,5-furandicarboxylate), poly(1,2-ethylene brassylate-co-1,4-butylene-2,5-furandicarboxylate), poly(1,2-ethylene succinate-co-1,4-butylene- 2,5-furandicarboxylate), poly(1,4-butylene adipate-co-1,2-ethylene-2,5-furandicarboxylate), poly(1,4-butylene sebacate-co-1,2-ethylene-2,5-furandicarboxylate), poly(1,4-butylene azelate-co-1,2-ethylene-2,5-furandicarboxylate), poly(1,4-butylene brassylate-co-1,2-ethylene-2,5-furandicarboxylate), poly(1,4-butylene succinate-co-1,2-ethylene-2,5-furandicarboxylate), poly(1,4-butylene terephthalate), poly(1,4-butylene 2,5-furandicarboxylate), poly(1,2-ethylene terephthalate-co-1,4-butylene terephthalate), poly(1,3-propylene terephthalate-co-1,4-butylene terephthalate), poly(1,4-butylene terephthalate-co-1,4-butylene-2,5-furandicarboxylate), poly(1,2-ethylene terephthalate-co-1,4-butylene-2,5-furandicarboxylate), poly(1,3-propylene terephthalate-co-1,4-butylene-2,5-furandicarboxylate), poly(1,2-ethylene terephthalate-co-1,4-butylene-2,5-furandicarboxylate), poly(1,4-butylene terephthalate-co-1,2-ethylene-2,5-furandicarboxylate), poly(1,4-butylene adipate-co-1,4-butylene terephthalate), poly(1,4-butylene sebacate-co-1,4-butylene terephthalate), poly(1,4-butylene azelate-co-1,4-butylene terephthalate), poly(1,4-butylene brassylate-co-1,4-butylene terephthalate), poly(1,4-butylene succinate-co-1,4-butylene terephthalate), poly(1,4-butylene adipate-co-1,4-butylene sebacate-co-1,4-butylene terephthalate), poly(1,4-butylene azelate-co-1,4-butylene sebacate-co-1,4-butylene terephthalate), poly(1,4-butylene adipate-co-1,4-butylene azelate-co-1,4-butylene terephthalate), poly(1,4-butylene succinate-co-1,4-butylene sebacate-co-1,4-butylene terephthalate), poly(1,4-butylene adipate-co-1,4-butylene succinate-co-1,4-butylene terephthalate), poly(1,4-butylene azelate-co-1,4-butylene succinate-co-1,4-butylene terephthalate), block or random copolymers thereof. Preferably the diacid-diol polyesters comprising 1,4-butylene dicarboxylate units are preferably selected from the group consisting of poly(1,4-butylene succinate), poly(1,4-butylene azelate-co-1,4-butylene succinate), poly(1,4-butylene adipate-co-1,4-butylene terephthalate).

The diacid-diol polyesters comprising 1,4-butylene dicarboxylate units of body (i) may also advantageously comprise repetitive units derived from at least one hydroxy acid in an amount from 0 to 49% in moles, preferably from 0 to 30%, with respect to the total moles of the dicarboxylic component. Examples of convenient hydroxy acids are glycolic acid, hydroxybutyric acid, hydroxycaproic acid, hydroxyvaleric acid, 7-hydroxyheptanoic acid, 8-hydroxycaproic acid, 9-hydroxynonanoic acid, lactic acid or lactide. The hydroxy acids may be inserted into the chain as such or as prepolymers/oligomers, or they may also be pre-reacted with diacids or diols.

Long molecules with two functional groups, including those with non-terminal functional groups, may also be added in quantities of no more than 10% in moles with respect to the total moles of the dicarboxylic component. Examples are dimer acids, ricinoleic acid and acids having epoxy functional groups and also polyoxyethylenes having molecular weights between 200 and 10000.

Diamines, amino acids and amino-alcohols may also be present in percentages of up to 30% in moles with respect to the total moles of the dicarboxylic component.

In the process of preparing diacid-diol polyesters comprising the 1,4-butylene dicarboxylate units of body (i), one or more polyfunctional molecules may also be advantageously added in quantities from 0.1 to 3% in moles to the total moles of the dicarboxylic component in order to obtain branched products. Examples of these molecules are glycerol, pentaerythritol, trimethylolpropane, citric acid, dipentaerythritol, monoanhydrosorbitol, monoanhydromannitol, acid triglycerides, polyglycerols, etc.

The molecular weight Mn of the diacid-diol polyesters comprising the 1,4-butylene dicarboxylate units of body (i) is preferably ≥ 20000, more preferably ≥ 40000. As for the polydispersity index of the molecular weights, Mw/Mn, this is preferably from 1.5 to 10, more preferably from 1.6 to 5, and even more preferably from 1.8 to 3.5.

The molecular weights Mn and Mw may be measured by Gel Permeation Chromatography (GPC). The determination can be conducted with the chromatographic system maintained at 40°C, using a set of two columns in series (particle diameter 5µm and 3µm with mixed porosity), a refractive index detector, chloroform as eluent (flow rate 0.5ml/min) and using polystyrene as a reference standard.

The Melt Flow Rate (MFR) of diacid-diol polyesters comprising the 1,4-butylene dicarboxylate units of body (i) is preferably from 500 to 1 g/10 min, more preferably from 100 to 3 g/10 min, even more preferably from 15 to 3 g/10 min (measurement at 190°C/2.16kg according to ISO 1133-1 'Plastics - determination of the melt mass-flow rate (MFR) and melt volume flow rate (MVR) of thermoplastics -Part 1: Standard method').

The content of terminal acid groups of said diacid-diol polyesters comprising the 1,4-butylene dicarboxylate units of body (i) is preferably from 15 to 160 meq/kg, more preferably from 20 to 100 meq/kg and even more preferably from 25 to 70 meq/kg.

The content of terminal acid groups can be measured as follows: 1.5-3 g of the polyester is placed in a 100 ml conical flask together with 60 ml of chloroform. After complete dissolution of the polyester, 25 ml of 2-propanol is added and, immediately before analysis, 1 ml of deionised water. The resulting solution is titrated with a previously standardised solution of NaOH in ethanol. An appropriate indicator, such as a glass electrode for acid-base titrations in non-aqueous solvents, is used to determine the equivalence point of the titration. The content of terminal acid groups is calculated on the basis of the consumption of NaOH solution in ethanol according to the following equation: $Terminal acid groups content \left(meq/kg polymer\right) = \frac{\left[\left(Veq-Vb\right)⋅T\right] ⋅ 1000}{P}$ in which:
Veq = ml of NaOH solution in ethanol at the equivalence point of the sample titration;
Vb = ml of NaOH solution in ethanol required to achieve pH 9.5 in the blank titration;
T = concentration of NaOH solution in ethanol expressed in moles/litre;
P = weight of sample in grams.

Preferably, said diacid-diol polyesters comprising the 1,4-butylene dicarboxylate units of body (i) exhibit an inherent viscosity (measured with a Ubbelohde viscometer for solutions in CHCl₃ of concentration 0.2 g/dl at 25 °C) greater than 0.3 dl/g, preferably from 0.3 to 2 dl/g, more preferably from 0.4 to 1.1 dl/g.

The diacid-diol polyesters comprising the 1,4-butylene dicarboxylate units of body (i) are biodegradable. For the purposes of the present invention, biodegradable polyester means a polymer that is biodegradable according to standard EN 13432.

The diacid-diol polyesters comprising the 1,4-butylene dicarboxylate units of body (i) may be synthesised according to any of the processes known in the state of the art. In particular, they may advantageously be obtained by a polycondensation reaction.

Advantageously, the synthesis process may be conducted in the presence of a suitable catalyst. Suitable catalysts include organometallic Tin compounds, e.g. stannoic acid derivatives, Titanium compounds, e.g. ortho-butyl titanate, Aluminium compounds, e.g. Al-triisopropyl, Antimony and Zinc and Zirconium compounds and mixtures thereof.

Examples of synthesis processes that may advantageously be used to prepare polyesters are described in international patent applications WO 2016/050963 A1 and WO 2016/050962 A1. In addition to the diacid-diol polyester, the composition of body (i) of the article according to the present invention may further optionally comprise 0-5% by weight, more preferably 0.05-4% by weight, even more preferably 0.1-3% by weight with respect to the total mixture, of at least one cross-linking agent and/or chain extender.

Said crosslinking agent and/or chain extender improves hydrolysis stability and is selected from di- and/or polyfunctional compounds bearing isocyanate, peroxide, carbodiimide, isocyanurate, oxazoline, epoxide, anhydride, divinyl ether groups and mixtures thereof. Preferably the crosslinking agent and/or chain extender comprises at least one di- and/or polyfunctional compound bearing epoxide or carbodiimide groups.

Preferably, the crosslinking agent and/or chain extender comprises at least one di- and/or polyfunctional compound bearing isocyanate groups. More preferably, the crosslinking agent and/or chain extender comprises at least 25% by weight of one or more di- and/or polyfunctional compounds bearing isocyanate groups. Especially preferred are mixtures of di- and/or polyfunctional compounds bearing isocyanate groups with di- and/or polyfunctional compounds bearing epoxide groups, even more preferably comprising at least 75% by weight of di- and/or polyfunctional compounds bearing isocyanate groups.

Preferably, the di- and polyfunctional compounds bearing isocyanate groups are selected from p-phenylene diisocyanate, 2,4-toluene diisocyanate, 2,6-toluene diisocyanate, 4,4-diphenylmethane diisocyanate, 1,3-phenylene-4-chloro diisocyanate, 1,5-naphthalene diisocyanate, 4,4-diphenylene diisocyanate, 3,3'-dimethyl-4,4-diphenylmethane diisocyanate, 3-methyl-4,4'-diphenylmethane diisocyanate, diphenyl ether diisocyanate, 2,4-cyclohexane diisocyanate, 2,3-cyclohexane diisocyanate-1-methyl-2,4-cyclohexyl diisocyanate, 1-methyl 2,6-cyclohexyl diisocyanate, bis-(isocyanate cyclohexyl) methane, 2, 4, 6-toluene triisocyanate, 2,4,4-diphenylether triisocyanate, polymethylene-polyphenyl-polyisocyanates, methylene diphenyl diisocyanate triphenylmethane triisocyanate, 3,3'dithiolylene-4,4-diisocyanate, 4,4'-methylenebis(2-methyl-phenyl isocyanate), hexamethylene diisocyanate, 1,3-cyclohexylene diisocyanate, 1,2-cyclohexylene diisocyanate and mixtures thereof. In a preferred embodiment the compound bearing isocyanate groups is 4,4-diphenylmethane-diisocyanate.

With regard to di- and polyfunctional compounds bearing peroxide groups, these are preferably selected from benzoyl peroxide, lauroyl peroxide, isononanoyl peroxide, di-(t-butylperoxyisopropyl)benzene, t-butyl peroxide, dicumyl peroxide, alpha,alpha'-di(t-butylperoxy)diisopropylbenzene, 2,5-dimethyl-25di(t-butylperoxy)hexane, t-butyl cumyl peroxide, di-t-butyl peroxide, 2,5-dimethyl-2,5-di(t-butylperoxy)hex-3-yne, di(4-t-butylcyclohexyl)peroxy dicarbonate dicetyl peroxydicarbonate, dimyristyl peroxydicarbonate, 3,6,9-triethyl-3,6,9-trimethyl-1,4,7-triperoxonane, di(2-ethylhexyl) peroxydicarbonate and mixtures thereof. The di- and polyfunctional compounds bearing carbodiimide groups, which are preferably used in the composition of body (i) of the article according to the present invention, are selected from poly(cyclooctylene carbodiimide), poly(1,4-dimethylcyclohexylene carbodiimide), poly(cyclohexylene carbodiimide), poly(ethylene carbodiimide), poly(butylene carbodiimide), poly(isobutylene carbodiimide), poly( nonylene carbodiimide), poly(dodecylene carbodiimide) poly(neopentylene carbodiimide), poli(1,4-dimethylene phenylene carbodiimide), poly(2,2',6,6',tetraisopropyldiphenylene carbodiimide) (Stabaxol^{®} D), poly(2,4,6-triisolpropyl-1,3-phenylene carbodiimide) (Stabaxol^{®} P-100), poly(2,6-diisopropyl-1,3-phenylene carbodiimide) (Stabaxol^{®} P), poly(tolyl carbodiimide), poly(4,4'-diphenylmethane carbodiimide), poly(3,3'-dimethyl-4,4'-biphenylene carbodiimide), poly(p-phenylene carbodiimide), poly(m-phenylene carbodiimide), poly(3,3'-dimethyl-4,4'-diphenylmethane carbodiimide), poly (naphthylene carbodiimide), poly(isophorone carbodiimide), poly(cumene carbodiimide), p-phenylene bis(ethylcarbodiimide), 1,6-hexamethylene bis(ethylcarbodiimide), 1,8-octamethylene bis(ethylcarbodiimide), 1,10-decamethylene bis(ethylcarbodiimide), 1,12-dodecamethylene bis(ethylcarbodiimide) and mixtures thereof.

Examples of di- and polyfunctional compounds bearing epoxide groups which may advantageously be used in the composition of body (i) of the article according to the present invention are all polyepoxides from epoxidised oils and/or from styrene - glycidyl ether methyl methacrylate, glycidyl ether-methyl methacrylate, within a range of molecular weights between 1000 and 10000 and with a number of epoxides per molecule in the range of 1 to 30 and preferably 5 to 25, the epoxides selected from the group comprising diethylene glycol diglycidyl ether, polyethylene glycol diglycidyl ether, polyglycerol polyglycidyl ether, 1,2-epoxybutane, polyglycerol polyglycidyl ether, isoprene diepoxide, and cycloaliphatic diepoxides, 1,4-cyclohexanedimethanol diglycidyl ether, glycidyl 2-methylphenyl ether, glycerol propoxylatotriglycidyl ether, 1,4-butanediol diglycidyl ether, sorbitol polyglycidyl ether, glycerol diglycidyl ether, tetraglycidyl ether of meta-xylenediamine and diglycidyl ether of bisphenol A and mixtures thereof.

In a particularly preferred embodiment of the invention, the crosslinking agent and/or chain extender optionally present in the composition of body (i) of the article according to the present invention comprises compounds bearing isocyanate groups, preferably 4,4-diphenylmethane-diisocyanate, and/or bearing carbodiimide groups, and/or bearing epoxide groups, preferably of the styrene-glycidyl ether-methylmethacrylate type.

In a particularly preferred embodiment of the invention, the crosslinking agent and/or chain extender comprises compounds bearing epoxide groups of the styrene-glycidyl ether-methyl methacrylate type.

Along with the di- and polyfunctional compounds bearing isocyanate, peroxide, carbodiimide, isocyanurate, oxazoline, epoxide, anhydride, divinyl ether groups, catalysts may also be used to increase the reactivity of the reactive groups. In the case of polyepoxides, fatty acid salts are preferably used, even more preferably calcium and zinc stearates.

In addition to the diacid-diol polyester, the body composition(s) of the article according to the present invention may be mixed with other polymers of synthetic or natural origin, whether biodegradable or not.

With regard to polymers of synthetic or natural origin, whether biodegradable or not, these are advantageously selected from the group consisting of polyhydroxyalkanoates, vinyl polymers, diacid-diol polyesters which are the same as or different from those previously described, polyamides, polyurethanes, polyureas, polycarbonates and mixtures thereof. In a particularly preferred form, said polymers may be blended in an amount of up to 80% by weight to the diacid-diol polyester of body (i) according to the present invention.

As far as the polyhydroxyalkanoates are concerned, these may be present in quantities from 30 to 80% w/w, preferably from 40 to 75% w/w, and even more preferably from 45 to 70% w/w, of the total composition of body (i).

These polyhydroxyalkanoates are preferably selected from the group consisting of the polyesters of lactic acid, poly-ε-caprolactone, polyhydroxybutyrate, polyhydroxybutyrate-valerate, polyhydroxybutyrate-propanoate, polyhydroxybutyrate-hexanoate, polyhydroxybutyrate-decanoate, polyhydroxybutyrate-dodecanoate, polyhydroxybutyrate-hexadecanoate, polyhydroxybutyrate-octadecanoate, poly 3-hydroxybutyrate-4-hydroxybutyrate. Preferably, the polyhydroxyalkanoate comprises at least 80% w/w of one or more lactic acid polyesters.

In a preferred embodiment, lactic acid polyesters are selected from the group consisting of poly L-lactic acid, poly D-lactic acid, poly D-L lactic acid stereo complex, copolymers comprising more than 50% in moles of said lactic acid polyesters or mixtures thereof.

Particularly preferred are lactic acid polyesters containing at least 95% w/w of repetitive units derived from L-lactic or D-lactic acid or combinations thereof, with a molecular weight Mw of more than 50000 and a shear viscosity of 50-700 Pa.s, preferably of 80-500 Pa.s (measured according to ASTM D3835 standard at T=190°C, shear rate=1000s⁻¹, D=1mm, L/D=10).

In a particularly preferred embodiment of the present invention the lactic acid polyester comprises at least 95% w/w of units derived from L-lactic acid, ≤ 5% w/w of repetitive units derived from D-lactic acid, has a Melting Temperature in the range 135-175°C, a Glass Transition Temperature (Tg) in the range 50-65°C and an MFR (measured according to ASTM-D1238 standard at 190°C and 2.16 kg) in the range 1-50 g/10 min.

Commercial examples of lactic acid polyesters with these properties include the Ingeo^{™} Biopolymer brand products 4043D, 3251D, 6202D, and the Luminy^{®} brand product L105.

Preferred vinyl polymers include polyethylene, polypropylene, their copolymers, polyvinyl alcohol, polyethylene vinyl acetate and polyethylene vinyl alcohol, polystyrene, chlorinated vinyl polymers, polyacrylates.

In addition to polyvinyl chloride, the chlorinated vinyl polymers include polyvinylidene chloride, polyethylene chloride, poly(vinyl chloride-vinyl acetate), poly(vinyl chloride-ethylene), poly(vinyl chloride-propylene), poly(vinyl chloride-styrene), poly(vinyl chloride-isobutylene) as well as copolymers in which polyvinyl chloride accounts for more than 50% in moles. Such copolymers may be random, block or alternating.

As regards the polyamides, these are preferably selected from the group consisting of polyamide 6 and 6.6, polyamide 9 and 9.9, polyamide 10 and 10.10, polyamide 11 and 11.11, polyamide 12 and 12.12 and their combinations of the types 6/9, 6/10, 6/11, 6/12 and their blends and copolymers, both random and block.

Preferably, the polycarbonates are selected from the group consisting of polyalkylene carbonates, more preferably polyethylene carbonates, polypropylene carbonates, polybutylene carbonates, their blends and both random and block copolymers.

Among the polyethers, those preferred are selected from the group consisting of polyethylene glycols, polypropylene glycols, polybutylene glycols their copolymers and their blends with molecular weights from 70000 to 500000.

As regards polymers of natural origin, these are advantageously selected from starch, chitin, chitosan, alginates, proteins such as gluten, zein, casein, collagen, gelatin, natural gums, cellulose (also in nanofibrils) and pectin.

The term starch is understood here to mean all types of starch, i.e. flour, native starch, hydrolysed starch, destructured starch, gelatinised starch, plasticised starch, thermoplastic starch, biofillers comprising complexed starch or mixtures thereof. Particularly suitable according to the invention are starches such as potato, maize, tapioca and pea starch. Particularly advantageous are starches capable of being easily destructured and having high initial molecular weights, such as potato or maize starch. Starch may be present both as such and in a chemically modified form, such as in the form of starch esters with a degree of substitution between 0.2 and 2.5, hydroxypropyl starch, and modified starch with fat chains.

By destructured starch reference is made herein to the teachings contained in Patents EP-0 118240 and EP-0 327 505, starch processed in such a way that it does not substantially show the so-called 'Maltese crosses' under the optical microscope in polarised light and the so-called 'ghosts' under the optical microscope in phase contrast. Advantageously, the destructuring of starch is carried out by an extrusion process at temperatures between 110-250°C, preferably 130-180°C, pressures between 0.1 and 7 MPa, preferably 0.3-6 MPa, preferably providing a specific energy of more than 0.1 kWh/kg during said extrusion.

The destructuring of starch preferably takes place in the presence of 1 to 40% w/w, relative to the weight of the starch, of one or more plasticisers selected from water and polyols having 2 to 22 carbon atoms. As far as water is concerned, this may also be the water naturally present in starch. Among the polyols, polyols with 1 to 20 hydroxyl groups containing 2 to 6 carbon atoms, their ethers, thioethers and organic and inorganic esters are preferred.

Examples of these polyols are glycerol, diglycerol, polyglycerol, pentaerythritol, ethoxylated polyglycerol, ethylene glycol, polyethylene glycol, 1,2-propanediol, 1,3-propanediol, 1,4-butanediol, neopentylglycol, sorbitol, sorbitol monoacetate, sorbitol diacetate, sorbitol monoethoxylate, sorbitol diethoxylate, and mixtures of these.

In a preferred embodiment, the starch is destructured in the presence of glycerol or a plasticiser mixture comprising glycerol, more preferably comprising 2 - 90% w/w glycerol. Preferably, the destructured and cross-linked starch according to the present invention comprises from 1 to 40% w/w, relative to the weight of the starch, of plasticisers.

When present, starch is preferably in the form of particles having a circular, elliptical or otherwise ellipse-like cross-section with an arithmetical mean diameter, measured along the major axis of the particle, of less than 1 micron, and more preferably less than 0.5 µm mean diameter.

The diacid-diol polyester of body (i) of the article according to the invention may further optionally be mixed with one or more inorganic fillers, preferably selected from the group consisting of kaolin, barytes, clay, talc, calcium and magnesium, iron and lead carbonates, aluminium hydroxide, kieselguhr, aluminium sulphate, barium sulphate, silica, mica, titanium dioxide and wollastonite. Preferably the inorganic filler is present in an amount from 0 to 50% w/w, preferably from 5 to 40% w/w, more preferably from 10 to 30% w/w of the total composition of body (i). In a preferred embodiment of the present invention, the inorganic filler is talc.

The diacid-diol polyester of the article according to the invention may also optionally be mixed with one or more additives selected from the group consisting of plasticisers, UV stabilisers, lubricants, nucleating agents, surfactants, antistatic agents, pigments, compatibilising agents, lignin, silymarin organic acids, antioxidants, anti-mould agents, waxes, process aids.

Each additive is present in an amount of preferably less than 10% by weight, more preferably less than 5% by weight, even more preferably less than 1% by weight of the total weight of the composition of body (i).

As far as plasticisers are concerned, in addition to the plasticisers preferably used for the preparation of destructured starch described above, these are selected from the group consisting of trimellitates, such as trimellitic acid esters with C4-C20 mono-alcohols preferably selected from the group consisting of n-octanol and n-decanol, and aliphatic esters having the following structure:

R1-O- C(O)-R4-C(O)-[-O-R2-O-C(O)-R5-C(O)-]m-O-R3

in which:
R1 is selected from one or more of the groups formed by H, linear and branched saturated and unsaturated alkyl residues of the C1-C24 type, polyol residues esterified with C1-C24 monocarboxylic acids;
R2 comprises -CH2-C(CH3)2-CH2- and C2-C8 alkylene groups, and consists of at least 50% in moles of said -CH2-C(CH3)2-CH2- groups;
R3 is selected from one or more of the groups formed by H, linear and branched saturated and unsaturated alkyl residues of polyols esterified with C1-C24 monocarboxylic acids;
R4 and R5 are the same or different, comprise one or more C2-C22, preferably C2-C11, more preferably C4-C9, alkenes, and consist of at least 50% in moles of C7 alkenes;
m is a number between 1-20, preferably 2-10, more preferably 3-7.

Preferably, in said esters at least one of groups R1 and/or R3 comprises, preferably in an amount ≥ 10% in moles, more preferably ≥ 20%, even more preferably ≥ 25% in moles, with respect to the total amount of groups R1 and/or R3, polyol residues esterified with at least one C1-C24 monocarboxylic acid selected from the group consisting of stearic acid, palmitic acid, 9-ketostearic acid, 10-ketostearic acid and mixtures thereof. Examples of such aliphatic esters are described in Italian patent application MI2014A000030 and international patent applications WO 2015/104375 and WO 2015/104377.

Preferably, the lubricants are selected from esters and metal salts of fatty acids such as, for example, zinc stearate, calcium stearate, aluminium stearate and acetyl stearate. Preferably, the composition of body (i) according to the present invention comprises up to 1% by weight of lubricants, more preferably up to 0.5% by weight, relative to the total weight of the composition.

Examples of nucleating agents include saccharin sodium salt, calcium silicate, sodium benzoate, calcium titanate, boron nitride, isotactic polypropylene, low molecular weight PLA. Pigments may also be added if required, e.g. titanium dioxide, clays, copper phthalocyanin, titanium dioxide, silicates, iron oxides and hydroxides, carbon black, and magnesium oxide.

Process aids such as slip and/or releasing agents include, for example, biodegradable fatty acid amides such as oleamide, erucamide, ethylene-bis-stearyl amide, fatty acid esters such as glycerol oleates or glycerol stearates, saponified fatty acids such as stearates, inorganic agents such as silicas or talc. Process aids are preferably present in quantities of less than 10% by weight, more preferably less than 5% by weight, even more preferably less than 1% by weight of the total weight of the mixture.

Advantageously, body (i) of the article moulded or thermoformed according to the present invention is biodegradable according to standard EN 13432.

According to a preferred aspect, body (i) comprises, or is preferably made up of, an aliphatic-aromatic diacid-diol polyester as the major component.

According to a further preferred aspect, body (i) comprises an aliphatic-type diacid-diol polyester or a mixture of an aliphatic-type diacid-diol polyester and a polyhydroxyalkanoate.

Other particularly preferred examples of compositions of body (i) of the article according to the present invention are:
- Composition A, comprising with respect to the total composition of body (i), 20 - 60% w/w, preferably 25 - 50% w/w, of at least one aliphatic-aromatic polyester comprising 1,4-butylene dicarboxylate units; 40 - 80% w/w, preferably 50 - 75% w/w, of at least one polyhydroxyalkanoate; optionally 0 - 0.5% w/w, preferably 0.01 - 0.25% w/w, of a crosslinking agent and/or chain extender and optionally 0 - 10% w/w, preferably 1 - 5% w/w, of at least one inorganic filler.
- Composition B, comprising with respect to the total composition of body (i) 30 - 60% w/w, of at least one aliphatic polyester comprising 1,4-butylene dicarboxylate units; 5 - 40% w/w, of at least one polyhydroxyalkanoate; 5 - 40% w/w, of at least one inorganic filler.

Barrier label (ii) of the biodegradable moulded or thermoformed article according to the present invention comprises at least one biodegradable support comprising a mixture comprising a polyhydroxyalkanoate and at least one aliphatic and/or aliphatic-aromatic polyester, and at least one coating layer. Preferably, barrier label (ii) according to the invention is suitable for food contact.

The biodegradable support of barrier label (ii) of the biodegradable moulded or thermoformed article according to the present invention comprises a mixture comprising a polyhydroxyalkanoate constituting its continuous phase and an aliphatic and/or aliphatic-aromatic polyester constituting its discontinuous phase.

Said biodegradable support preferably has an elastic modulus of more than 450 MPa.

The biodegradable support of barrier label (ii) of the biodegradable moulded or thermoformed article according to the present invention comprises a mixture comprising an aliphatic and/or aliphatic-aromatic polyester as a discontinuous phase, said aliphatic-aromatic polyester being preferred.

In the case of an aliphatic-aromatic polyester, this preferably includes:
(a) a dicarboxylic component comprising, with respect to the total dicarboxylic component
   a1) 30-70% in moles, preferably 40-60% in moles, of units derived from at least one aromatic dicarboxylic acid;
   a2) 70-30% in moles, preferably 60-40% in moles, of units derived from at least one saturated aliphatic dicarboxylic acid;
   a3) 0-5% in moles of units from at least one unsaturated aliphatic dicarboxylic acid;
b) a diol component comprising, with respect to the total diol component:
   b1) 95-100% in moles, preferably 97-100% in moles, of units derived from a saturated aliphatic diol;
   b2) 0-5% in moles, preferably 0-3% in moles, of units derived from at least one unsaturated aliphatic diol.

In the case of an aliphatic polyester, this preferably comprises:
c) a dicarboxylic component comprising with respect to the total dicarboxylic component:
   c1) 95-100% in moles of units derived from at least one aliphatic dicarboxylic acid;
   c2) 0-5% in moles of units derived from at least one unsaturated aliphatic dicarboxylic acid;
d) a diol component comprising, with respect to the total diol component:
   d1) 95-100% in moles, preferably 97-100% in moles, of units derived from at least one saturated aliphatic diol;
   d2) 0-5% in moles, preferably 0-3% in moles, of units derived from an unsaturated aliphatic diol.

With regard to components a and c of the aliphatic-aromatic and/or aliphatic polyester of the biodegradable support of barrier label (ii), these are defined on the basis of the descriptions of the corresponding a and c components of the aliphatic-aromatic and/or aliphatic polyester of body (i).

With regard to the saturated aliphatic diols in components e1 and f1, these are preferably selected from 1,2-ethanediol, 1,2-propanediol, 1,3-propanediol, 1,4-butanediol, 1,5-pentanediol, 1,6-hexanediol, 1,7-heptanediol, 1,8-octanediol, 1,9-nonanediol, 1,10-decanediol, 1,11-undecanediol, 1,12-dodecanediol, 1,13-tridecanediol, 1,4- cyclohexanedimethanol, neopentylglycol, 2-methyl-1,3-propanediol, dianhydrosorbitol, dianhydromannitol, dianhydroiditol, cyclohexanediol, dialkylene glycols and polyalkylene glycols having a molecular weight of 100-4000, such as polyethylene glycol, polypropylene glycol and mixtures thereof. Preferably the diol component comprises at least 50% in moles of one or more diols selected from 1,2-ethanediol, 1,3-propanediol, 1,4-butanediol. More preferably the diol component comprises or consists of 1,4-butanediol.

With regard to the unsaturated aliphatic diols in components e2 and f2, these are preferably selected from *cis* 2-buten-1,4-diol, *trans* 2-buten-1,4-diol, 2-butyn-1,4-diol, *cis* 2-penten-15-diol, *trans* 2-penten-1,5-diol, 2-pentyn-1,5-diol, *cis* 2-hexen-1,6-diol, *trans* 2-hexen-1,6-diol, 2-hexyn-1,6-diol, *cis* 3-hexen-1,6-diol, *trans* 3-hexen-1,6-diol, 3-hexyn-1,6-diol.

In a preferred embodiment, the aliphatic and/or aliphatic-aromatic polyesters of the biodegradable support of barrier label (ii) are preferably selected from the group comprising: poly(1,4-butylene succinate), poly(1,4-butylene adipate), poly(1,4-butylene azelate), poly(1,4-butylene sebacate), poly(1,4-butylene brassylate), poly(1,4-butylene azelate-co-1,4-butylene succinate), poly(1,4-butylene adipate-co-1,4-butylene succinate), poly(1,4-butylene adipate-co-1,4-butylene-2,5-furandicarboxylate), poly(1,4-butylene sebacate-co-1,4-butylene-2,5-furandicarboxylate), poly(1,4-butylene azelate-co-1,4-butylene-2,5-furandicarboxylate), poly(1,4-butylene brassylate-co-1,4-butylene-2,5-furandicarboxylate), poly(1,4-butylene succinate-co-1,4-butylene-2,5-furandicarboxylate), poly(1,2-ethylene adipate-co-1,4-butylene-2,5-furandicarboxylate), poly(1,2-ethylene sebacate-co-1,4-butylene- 2,5-furandicarboxylate), poly(1,2-ethylene azelate-co-1,4-butylene-2,5-furandicarboxylate), poly(1,2-ethylene brassylate-co-1,4-butylene-2,5-furandicarboxylate), poly(1,2-ethylene succinate-co-1,4-butylene-2,5-furandicarboxylate), poly(1,4-butylene adipate-co-1,2-ethylene- 2,5-furandicarboxylate), poly(1,4-butylene sebacate-co-1,2-ethylene-2,5-furandicarboxylate), poly(1,4-butylene azelate-co-1,2-ethylene-2,5-furandicarboxylate), poly(1,4-butylene brassylate-co-1,2-ethylene-2,5-furandicarboxylate), poly(1,4-butylene succinate-co-1,2-ethylene-2,5-furandicarboxylate), poly(1,4-butylene terephthalate), poly(1,4-butylene-2,5-furandicarboxylate), poly(1,2-ethylene terephthalate-co-1,4-butylene terephthalate), poly(1,3-propylene terephthalate-co-1,4-butylene terephthalate), poly(1,4-butylene terephthalate-co-1,4-butylene-2,5-furandicarboxylate), poly(1,2-ethylene terephthalate-co-1,4-butylene-2,5-furandicarboxylate), poly(1,3-propylene terephthalate-co-1,4-butylene-2,5-furandicarboxylate), poly(1,2-ethylene terephthalate-co-1,4-butylene-2,5-furandicarboxylate) poly(1,4-butylene terephthalate-co-1,2-ethylene-2,5-furandicarboxylate), poly(1,4-butylene adipate-co-1,4-butylene terephthalate), poly(1,4-butylene sebacate-co-1,4-butylene terephthalate), poly(1,4-butylene azelate-co-1,4-butylene terephthalate), poly(1,4-butylene brassylate-co-1,4-butylene terephthalate), poly(1,4-butylene succinate-co-1,4-butylene terephthalate), poly(1,4-butylene adipate-co-1,4-butylene sebacate-co-1,4-butylene terephthalate), poly(1,4-butylene azelate-co-1,4-butylene sebacate-co-1,4-butylene terephthalate), poly(1,4-butylene adipate-co-1,4-butylene azelate-co-1,4-butylene terephthalate), poly(1,4-butylene succinate-co-1,4-butylene sebacate-co-1,4-butylene terephthalate), poly(1,4-butylene adipate-co-1,4-butylene succinate-co-1,4-butylene terephthalate), poly(1,4-butylene azelate-co-1,4-butylene succinate-co-1,4-butylene terephthalate), and block or random copolymers thereof. More preferably, the aliphatic and/or aliphatic-aromatic polyesters are preferably selected from the group consisting of poly(1,4-butylene azelate), poly(1,4-butylene sebacate), poly(1,4-butylene adipate-co-1,4-butylene terephthalate), poly(1,4-butylene sebacate-co-1,4-butylene terephthalate), poly(1,4-butylene azelate-co-1,4-butylene terephthalate), poly(1,4-butylene adipate-co-1,4-butylene sebacate-co-1,4-butylene terephthalate), poly(1,4-butylene azelate-co-1,4-butylene sebacate-co-1,4-butylene terephthalate) poly(1,4-butylene adipate-co-1,4-butylene azelate-co-1,4-butylene terephthalate).

The aliphatic and/or aliphatic-aromatic polyesters of the biodegradable support of barrier label (ii) may also advantageously comprise repeating units derived from at least one hydroxyacid in an amount from 0 to 49% in moles, preferably from 0 to 30%, relative to the total moles of the dicarboxylic component. Examples of convenient hydroxy acids are glycolic acid, hydroxybutyric acid, hydroxycaproic acid, hydroxyvaleric acid, 7-hydroxyheptanoic acid, 8-hydroxycaproic acid, 9-hydroxynonanoic acid, lactic acid or lactide. The hydroxy acids may be inserted into the chain as such or as prepolymers/oligomers, or they may also be pre-reacted with diacids or diols.

The aliphatic and/or aliphatic-aromatic polyesters of the biodegradable support of barrier label (ii) are characterised by the molecular weights Mn and Mw, MFR, terminal acid groups, inherent viscosity and biodegradability already defined for the aliphatic and/or aliphatic-aromatic polyesters of body (i).

The biodegradable support of barrier label (ii) of the biodegradable moulded or thermoformed article according to the present invention comprises a mixture comprising a polyhydroxyalkanoate, which forms its continuous phase.

According to one aspect of the present invention, the support comprises a mixture preferably comprising 10 to 49%, preferably 20 to 45% and more preferably 30 to 45% by weight of aliphatic and/or aliphatic-aromatic polyester and 90 to 51%, preferably 80 to 55% and more preferably 70 to 55% by weight of polyhydroxyalkanoate relative to the total weight of the mixture.

Preferably said mixture consists of said aliphatic and/or aliphatic/aromatic polyester, said polyhydroxyalkanoate and optionally a cross-linking agent and/or chain extender.

With regard to the polyhydroxyalkanoates constituting the mixture that forms the biodegradable support of barrier label (ii), reference should be made to the description of the polyhydroxyalkanoates of body (i).

In addition to the mixture comprising a polyhydroxyalkanoate constituting its continuous phase and an aliphatic and/or aliphatic-aromatic polyester constituting its discontinuous phase, the biodegradable support of barrier label (ii) of the article according to the present invention may optionally comprise other polymers of synthetic or natural origin, whether biodegradable or not.

With regard to polymers of synthetic or natural origin, whether biodegradable or not, these are advantageously selected from the group consisting of vinyl polymers, diacid-diol polyesters which are the same as or different from those described above, polyamides, polyurethanes, polyureas, polycarbonates and mixtures thereof, as already defined for body (i). In a particularly preferred form, said polymers may be mixed in an amount of up to 80% by weight with the aliphatic and/or aliphatic-aromatic polyester of the biodegradable support of barrier label (ii) of the article according to the present invention.

The mixture comprising a polyhydroxyalkanoate and at least one aliphatic/aliphatic-aromatic polyester of the biodegradable support of barrier label (ii) may optionally comprise the following components, as already described quantitatively for body (i): long difunctional molecules; diamines, amino acids, amino alcohols; polyfunctional molecules, cross-linking agents and/or chain extenders.

In addition to the mixture comprising a polyhydroxyalkanoate constituting its continuous phase and an aliphatic and/or aliphatic-aromatic polyester constituting its discontinuous phase, the biodegradable support of barrier label (ii) of the article according to the present invention may optionally comprise one or more additives selected from the group consisting of plasticisers, UV stabilisers, lubricants, nucleating agents, surfactants, antistatic agents, pigments, compatibilising agents, lignin, silymarin organic acids, antioxidants, anti-mould agents, waxes, process aids, as already defined for body (i). Each additive is present in an amount preferably less than 10% by weight, more preferably less than 5% by weight, even more preferably less than 1% by weight of the total weight of the composition of the support of barrier label (ii).

Advantageously, the support of barrier label (ii) of the moulded or thermoformed article according to the present invention is biodegradable according to standard EN 13432. Particularly preferred examples of compositions of biodegradable support of barrier label (ii) of the article according to the present invention are:
- Composition C, comprising with respect to the total composition of the support of barrier label (ii): 10-60% w/w, preferably 25-50% w/w, of at least one aliphatic-aromatic polyester; 20-90% w/w, preferably 40-75% w/w, of at least one polyhydroxyalkanoate; 0-10% w/w, preferably 1-5% w/w of at least one crosslinking agent and/or chain extender.
- Composition D, comprising with respect to the total composition of the support of barrier label (ii): 10-80% w/w of at least one aliphatic polyester; 20-90% w/w of at least one polyhydroxyalkanoate; 0-10% w/w of at least one cross-linking agent and/or chain extender.

The biodegradable support of barrier label (ii) of the biodegradable moulded or thermoformed article according to the present invention may advantageously be obtained by film-forming processes, preferably blown film-forming, or cast extrusion processes. It may also be subjected to bi-orientation processes and other treatments to increase the final performance of the packaging.

The biodegradable support of barrier label (ii) of the biodegradable moulded or thermoformed article according to the present invention may also be subjected to activation treatments (e.g. treatments to increase surface tension such as, for example, plasma treatment, corona treatment or priming treatments) to increase adhesion of the coating layer and prevent delamination. The surface characteristics of the support of barrier label (ii) allow effective adhesion to the coating layer and/or body (i) to be achieved even with mild treatments or in the absence of such activation treatments.

The support surface has greater roughness than commonly used PLA films. In particular, the mean square roughness (Sq), measured by atomic force microscopy (AFM) over an area of 10 µm x 10 µm, is advantageously greater than 10 nm, preferably greater than 15 nm, more preferably greater than 20 nm, even more preferably greater than 40 nm and advantageously 45 nm or less, 35 nm or less and preferably 30 nm or less. This is achieved for example by operating in tapping mode with a resolution of 256 points per 256 lines, using a monolithic silicon microlever (cantilever) 225 microns long, with a natural frequency of 190kHz, force constant 48N/m, tip radius less than 10 nm.

This mean square roughness value Sq is calculated as the square root of the mean of the squares of the deviations of the true profile from the mean line, according to the formula below: $Sq = \sqrt{\left(\frac{1}{N}{\sum }_{i = 1}^{N} {r}^{2}\right)}$ where N is the total number of acquisitions in the area considered (e.g. 10 µm x 10 µm) and r is the deviation of the actual profile in each acquisition with respect to the mean line.

In contrast to average roughness, the value of Sq is therefore also influenced by the amplitude of the peaks and troughs detected by the instrument on the measured surface, making it possible to distinguish between surfaces which are undulating to a greater or lesser degree.

It is believed that the characteristic undulation of the support has the effect of facilitating adhesion of the coating. Upon AFM analysis carried out under the conditions described above, such a surface also exhibits a difference Sy between maximum profile height (maximum peak) and maximum profile re-entrant depth (maximum trough) with respect to the mean line typically greater than 90 nm, advantageously greater than 95 nm, preferably greater than 100, more preferably greater than 150 nm and even more preferably greater than 200 nm. Advantageously, Sy is 300 nm or less, preferably 280 nm or less.

The thickness of the biodegradable barrier layer (ii) is advantageously less than 120 µm, more advantageously less than 80 µm, preferably less than 50 µm and most preferably less than or equal to 30 µm. The thickness of the layer may be measured by any suitable technique such as by micrometer or electron microscope.

In particular, the biodegradable support of barrier label (ii) advantageously exhibits elongation-at-break values in the MD (machine direction) (εb) of less than 400%, preferably less than 350%, more preferably less than 200%, even more preferably less than 150%, measured according to ASTM D882 (23°C, 50% relative humidity with Vo 50 mm/min).

Furthermore, the biodegradable support of barrier label (ii) advantageously exhibits elastic modulus (E) values of above 450 MPa, preferably above 500 MPa and more preferably above 1000MPa, measured according to ASTM D882 (23°C, 50% relative humidity with Vo 50 mm/min). In a particularly advantageous aspect, the biodegradable support of barrier label (ii) has elastic modulus (E) values above 1500MPa and preferably above 1700MPa.

Advantageously, the biodegradable support of barrier label (ii) is biodegradable according to standard EN 13432.

The biodegradable support of barrier label (ii) may be transparent or non-transparent. If the biodegradable support of barrier label (ii) is transparent, it advantageously exhibits Haze values of less than 30%, more preferably less than 20%, more preferably less than 14% (measured according to ASTM D1003).

In a preferred embodiment, the biodegradable moulded or thermoformed article according to the present invention comprises a body (i), a barrier label (ii) adhering to the part of body (i) in contact with food by means of an *in-mould labelling* process, and an additional layer adhering to the outer part of body (i) by means of an *in-mould labelling* process, in which said additional layer adhering to the outer part has the composition for the biodegradable label support (ii) described above.

The coating layer of barrier label (ii) of the biodegradable moulded or thermoformed article according to the present invention is adjacent to the biodegradable support.

Said coating layer may comprise inorganic materials (e.g. metal alkoxides, silicon oxides) or organic materials (e.g. polymers and biopolymers of a protein and/or polysaccharide or lipid-based nature), possibly in combination to form mixtures or overlapping layers.

According to another embodiment of the invention, said coating layer consists of one or more organic materials.

Of organic materials, use may be made of natural substances such as cellulose in various forms (e.g. in nanocrystalline -NCC- or nanofibrillated -NFC- form) and its derivatives, chitosan, chitin, pectin, gluten, casein, zein, starch in various forms and its derivatives, gelatine, whey protein, carragheenan, guar gum, xanthan, alginate, and synthetic polymers such as polyvinyl alcohol, ethylene vinyl alcohol, polyvinyl acetate, ethylene vinyl acetate, acrylates, polyamides, polyvinyl chlorides, organosilanes, polyethylene glycol. Among the synthetic polymers, polyvinyl alcohol (i.e. polyvinyl alcohol), ethylene vinyl alcohol and polyvinyl alcohol-based polymers with varying degrees of hydrolysis are preferred. Particularly preferred synthetic polymers are selected from polyvinyl alcohols, ethylene vinyl alcohols and their copolymers; even more preferred is polyvinyl alcohol with an advantageous degree of hydrolysis between 70-100%.

The coating layer may also include fillers such as zeolites, graphene, graphene oxide or zirconium phosphate to improve the performance of the final barrier.

According to one embodiment of the invention, said coating layer consists of one or more inorganic materials.

Inorganic materials include metals and their oxides and alkoxides, such as silver, copper, gold, aluminium, aluminium oxide, titanium oxide and/or aluminium-titanium oxide, silicon dioxide, Zn-oxide.

According to another embodiment of the invention, said coating layer consists of one or more organic materials and one or more inorganic materials in combination with each other.

According to this embodiment, preferably said coating layer comprises a first layer of organic, natural and/or synthetic material in contact with the biodegradable support of barrier label (ii) and a second layer of metallic material covering the first. Such a layer configuration advantageously exhibits an enhanced barrier effect.

Preferably, this coating layer comprises one or more materials selected from among: metals and their oxides and alkoxides, cellulose and its derivatives, starch and its derivatives, chitosan, synthetic polymers (such as polyvinyl alcohol, ethylene vinyl alcohol, polyvinyl acetate, ethylene vinyl acetate, acrylates, organosilanes, polyethylene glycol) and combinations thereof. As regards starch, reference should be made to what is described above in connection with body (i).

According to one aspect of the invention, the coating comprises destructured starch in a form complexed with polymers containing hydrophilic groups interspersed with hydrophobic sequences, such as the compositions described in patent application EP 2 758 465. Said compositions may be applied in the form of aqueous dispersions; preferably said compositions comprise, with respect to the total weight of the composition:
- 30 - 80% of destructured starch;
- 20 - 70% of polymers containing hydrophilic groups intercalated with hydrophobic sequences;
- 0 - 25% of plasticisers;
- 0 - 20% of water.

According to this aspect, by destructured starch in complexed form is meant a destructured starch that in the X-ray spectrometer presents one or more crystal forms that can be associated with one or more of the diffraction peaks listed below.

| *Crystalline form* | *VH* (2θ ) | VA (2θ) | EH (2θ) |
|---|---|---|---|
| | 7.4 (±0.3) | 7.7 (±0.3) | 7.0 (±0.2) |
| | 12.8 (±0.2) | 13.5 (±0.4) | 12.0 (±0.3) |
| | 16.7 (±0.2) | 15.7 (±0.1) | 13.1 (±0.3) |
| | 18.3 (±0.2) | 17.6 (±0.1) | 18.2 (±0.4) |
| | 19.7 (±0.3) | 19.3 (±0.2) | 24.9 (±0.2) |
| | 22.2 (±0.2) | 20.8 (±0.2) | |
| | 24.9 (±0.2) | 23.7 (±0.1) | |
| | | 26.4 (±0.1) | |
| | | 27.5 (±0.1) | |
| | | 28.6 (±0.1) | |

With regard to the polymers containing hydrophilic groups intercalated with hydrophobic sequences, these are preferably insoluble in water. This makes it possible to decrease the water permeability of the coating layer according to the present invention.

As far as polymers containing hydrophilic groups intercalated with hydrophobic sequences are concerned, these are advantageously selected from:
a. polyvinyl alcohol at hydrolysis degrees from 10 to 100%;
b. vinyl alcohol/vinyl acetate block copolymers;
c. polyvinyl acetate in dry form and in emulsified form in water;
d. ethylene copolymers with vinyl alcohol, vinyl acetate, acrylic acid, methacrylic acid, crotonic acid, itaconic acid, maleic anhydride, glycidyl methacrylate and mixtures of these;
e. aliphatic polyamides 6-6, 6-9 or 12, aliphatic polyurethanes, aliphatic and aliphatic/aromatic polyesters, random or block copolymers polyurethane/polyamide, polyurethane/polyether, polyurethane/polyester, polyamide/polyester polyamide/polyether, polyester/polyether, polyurea/polyester, polyurea/polyether, polylactic acid, polyglycolic acid, polycaprolactone/urethane, where the molecular weight of the polycaprolactone blocks is between 300 and 3000.

Mixtures of said polymers may also be used.

Among the polymers containing hydrophilic groups intercalated with hydrophobic sequences, those preferred are ethylene copolymers with vinyl alcohol and/or acrylic acid, polyvinyl alcohol at hydrolysis degrees from 10 to 100%, polyvinyl acetates in dry form and in emulsified form in water, vinyl alcohol/vinyl acetate block copolymers and mixtures of these.

Of these, polyvinyl alcohol and copolymers of ethylene with vinyl alcohol and with acrylic acid are particularly preferred.

In the case of ethylene copolymers with vinyl alcohol, these preferably contain 20-50% in moles of ethylene units.

In the case of ethylene copolymers with acrylic acid, these preferably contain 70-99% ethylene units by weight.

Said destructured and complexed starch composition is preferably deposited in the form of an aqueous dispersion.

As a result of the characteristics of the destructured and complexed starch composition described above, when used in the coating layer according to the invention, it helps to elevate its barrier properties, e.g. to saturated and aromatic hydrocarbon compounds, and is therefore particularly useful for packaging in the food industry.

This coating layer may be applied to the support using known techniques, such as techniques typically employed in the painting and printing industry. For example, application may take place in a molten state; alternatively, the coating layer may be transferred to the surface to be coated in the form of a solution or dispersion in a solvent, so that the solvent then evaporates and the coating or lacquer solidifies, as is the case in coating processes such as blade or film coating. In the latter case, an organic solvent or water is typically used. Other application methods comprise transfer of the coating material onto the surface by sublimation, e.g. under vacuum conditions or by electromagnetic processes.

Said application processes in the form of a solution or dispersion in a solvent typically comprise a stage of deposition of a coating layer on one of the surfaces of a support and a stage of drying said support.

After deposition, the process may also advantageously include the removal of some of the deposited coating composition from the support, thereby allowing the thickness of the coating layer to be adjusted (so-called levelling).

As regards the stage of drying the support, radiation systems, preferably infrared, convection systems, preferably by hot air, or contact systems, preferably with drying cylinders, or any combination of these, may advantageously be used.

According to a preferred aspect of the invention, barrier label (ii) corresponds to the barrier film that is the subject matter of patent application WO 2021/023763 A1, in respect of which the biodegradable support of the present application corresponds to biodegradable layer (i) and the coating of the barrier label of the present application represents coating layer (ii).

Barrier label (ii) of the biodegradable moulded or thermoformed article according to the present invention is advantageously characterised by low permeability to gases. In particular, barrier label (ii) of the biodegradable moulded or thermoformed article according to the present invention is advantageously characterised by an oxygen permeability less than 100 cc/m² x24h, more preferably less than 50 cc/m² x24h, even more preferably less than 5 cc/m² x24h and more than 0.1 cc/m² x24h measured at 23°C and 0% RH according to ASTM standard D3985.

Barrier label (ii) advantageously provides the biodegradable moulded or thermoformed article according to the present invention with low permeability to volatile substances. In particular it advantageously makes it possible to reduce the migration of THF towards the food by at least twice, preferably between 10 and 100 times, for example between 15 and 50 times, compared to when barrier label (ii) is not present.

The biodegradable moulded or thermoformed article according to the present invention is preferably characterised by a THF permeation barrier to the foodstuff that is twice greater than for the unlabelled article.

The invention will now be illustrated with some examples of embodiments which are intended to be illustrative.

### EXAMPLES

Body (i) composition 1: poly(1,4-butylene adipate-co-1,4-butylene terephthalate) (PBAT) with 47% in moles of aromatic units with respect to the dicarboxylic component and an MFR of 4.1 g/10 min (measured at 190°C with a weight of 2.16 kg according to ISO standard 1133-1, with a water content of less than 400 ppm) and acidity of 28 meq/kg.

Body (i) composition 2: 36.6% by weight poly(1,4-butylene adipate-co-1,4-butylene terephthalate) ("PBAT") having 47% in moles of aromatic units with respect to the dicarboxylic component and an MFR of 4.1 g/10 min (measured at 190°C with weight of 2.16 kg according to ISO standard 1133-1, with a water content of less than 400 ppm) and an acidity of 28 meq/kg; 59.5% by weight of polylactic acid ("PLA") Ingeo 3251D; 1% of Mistron R10C talc; 1.9% PLA-based masterbatch Ingeo 3251D including 10% by weight of Joncryl ADR368CS; 1% by weight of plant-derived oleamide.

Body (i) composition 3: 54.9% by weight of poly(1,4-butylene succinate) ("PBS") having an MFR of 8.3 g/10 min (measured at 190°C with a weight of 2.16 kg according to ISO standard 1133-1, with a water content of less than 400 ppm) and an acidity of 51 meq/kg; 27.2% by weight of polylactic acid ("PLA") Ingeo 3251D; 17.3% of Mistron R10C talc; 0.6% by weight of plant-derived oleamide.

Body (i) composition 4: poly(1,4-butylene succinate) ("PBS") having an MFR of 8.3 g/10 min (measured at 190°C with a weight of 2.16 kg according to ISO standard 1133-1, with a water content of less than 400 ppm) and an acidity of 51 meq/kg.

Body (i) compositions 2 and 3 were fed to a co-rotating twin-screw extruder model Icma San Giorgio MCM 25 HT (L/D = 52; diameter 25 mm) operating under the following conditions:
Body (i)-2
   Screw rotation = 150 rpm;
   Temperature profile = 110-150-200-210x5-200x3-170x3 (°C);
   Flow rate 10.1 kg/h;
   Vacuum degassing.
Body (i)-3
   Screw rotation = 200 rpm;
   Temperature profile = 110-150-190-200x5-190x3-170x3 (°C);
   Flow rate 10.1 kg/h;
   Vacuum degassing.
Barrier label (ii).

The biodegradable support of the barrier label was prepared as follows: 35.8% w/w poly(butylene adipate-co-butylene terephthalate) (PBAT) having 47% in moles of aromatic units in relation to the dicarboxylic component, MFR 4.2 g/10min (190°C; 2.16 kg, with a water content of less than 400 ppm) and an acidity 42 meq/kg; 61.8% w/w of Ingeo 3251D polylactic acid ("PLA"), MFR 40 g/10min (190°C; 2.16 kg); 2.4% w/w masterbatch comprising 10% w/w of Joncryl ADR4368CS (styrene - glycidyl-methyl methacrylate copolymer) and 90% w/w of Ingeo 4043D polylactic acid ("PLA"); were fed to a twin-screw extruder model Icma San Giorgio MCM 25 HT (L/D = 52; diameter 25 mm) operating under the following conditions:
Screw rotation = 200 rpm;
Temperature profile = 110-150-200-210x5-200x3-170x3 (°C);
Flow rate 10.1 kg/h;
Vacuum degassing.

The granules obtained in this way had an MFR value (190°C; 2.16 kg, according to ISO 1133-1 'Plastics - determination of the melt mass-flow rate (MFR) and melt volume flow rate (MVR) of thermoplastics - Part 1: Standard method') of 11.4 g/10 min. Said granules were fed to a Ghioldi model blown film machine with a 40 mm diameter screw and an L/D of 30 operating at 64 rpm with a 120-200x3 thermal profile. The film-forming head with an air gap of 0.9 mm and an L/D of 12 was set at 200°C. Film-forming was carried out with a blow ratio of 3.2 and a stretch ratio of 11.7.

The coating layer was prepared as follows: a complexed starch-based coating composition was prepared by feeding 19.8 kg/h native corn starch (containing 12% water), 12.9 kg/h polyvinyl alcohol with a degree of hydrolysis between 84.2% and 86.2%, 2.8 kg/h glycerine and 4.5 kg/h water to an OMC model twin- screw extruder operating under the following conditions:
Screw diameter (D) = 58 mm;
L/D = 36;
Rotation speed = 140 rpm;
Thermal profile = 145-170-200x4-150x2°C;
Throughput = 40 kg/h;
Vacuum degassing.

20 g of the product were added to 80 g of deionised water and dispersed by means of a rotor-stator disperser (Ika Ultra-Turrax T25) at 25000 rpm for 15 minutes. The suspension was cooled to room temperature.

The barrier label (ii) was obtained applying by airbrush to the surface of the biodegradable support the above referred suspension in the form of a 9.3g/m² coating layer.

### Examples 1-3

The adhesion of the biodegradable support of the barrier label (ii) to each of the bodies (i) 1-3 was carried out on the part in contact with the food by means of the in-mould labeling process described below.

The biodegradable support of the barrier label (ii), suitably cut to a size such that it covered the entire inside surface of the moulded article, was placed in the mould, on the male shell, and incorporated through the injection of molten body (i)-1, body (i)-2 or body (i)-3 compositions as a result of the high pressure exerted on the surface. The heat profile used in the injection moulding process, with 4 heating zones (from the hopper to the injection nozzle), was 140-160-190-190°C, and the holding pressure applied was 500 bar for a time of 2 seconds.

The moulded article obtained according to the process described above was without delamination effects in each of the 3 examples, and the biodegradable support could not be removed from the body.

### Example 4

The barrier label (ii) comprising both the support and the coating layer was made to adhere to the body (i)-4 on the part in contact with the food by means of the in-mould labelling process described in Examples 1-3. The moulded article obtained according to the process described above was without delamination effects, showing a strong adhesion of the barrier label (ii) to the body (i)-4.

For the evaluation of the barrier properties against THF of the barrier label (ii), a sealed bag of the barrier label (ii) containing granules of the material constituting the body (i)-4 introduced as a source of THF was prepared. The sealed bag was then placed in an aluminium sachet containing commercial mixture of ground roasted coffee for Espresso coffee machine for home use. The weight ratio between the granules of the material constituting the body (i)-4 and coffee powder used is 0.305.

### Comparative Example 5

As a reference sample, an aluminium sachet was prepared in which the granules of the material constituting the body (i)-4 were dispersed directly into the commercial mixture of ground roasted coffee for Espresso coffee machine for home use without a barrier label. The weight ratio between the granules of the material constituting the body (i)-4 and coffee powder used is 0.305.

After conditioning the aluminium sachet of Example 5 and Comparative Example 5 in an oven at T=60°C for 10 days, the quantity of THF migrated into the coffee powder was determined in order to evaluate the barrier label properties of the label against THF. An aliquot of 4-6 g of the coffee powder sample was recovered from the aluminium sachet to be analysed and the THF content was measured by GC-MS as described in WO 2017/148931. The results obtained are reported in Table 1.

For example, the THF content of an aliquot of 4-6 g of the coffee powder sample recovered from the aluminium sachet is measured as described in WO 2017/148931 A1.

**Table 1.**

| Sample | THF Permeate (ppm) |
|---|---|
| Example 4 | 15,1 |
| Comparative Example 5 | 99,6 |

The results reported in Table 1 clearly show that when the barrier label (ii) was present (Example 4) the quantity of THF migrated into the coffee powder was much lower than when the label was absent (Comparative Example 5).

## Claims

1. Biodegradable moulded or thermoformed article for food packaging comprising a body and a barrier label wherein:
i. the body comprises at least one biodegradable diacid-diol polyester comprising 1,4-butylene dicarboxylate units;
ii. the barrier label comprises at least one biodegradable support consisting of a mixture comprising a polyhydroxyalkanoate and at least one aliphatic and/or aliphatic-aromatic polyester, and at least one coating layer;
where said barrier label (ii) is caused to adhere to body (i) by an *in-mould labelling* process in the part in contact with food.

2. Biodegradable moulded or thermoformed article according to claim 1, **characterised by** a THF permeation barrier to food, measured as disclosed in the description, that is twice greater than that of the unlabelled article.

3. Biodegradable moulded or thermoformed article according to either of claims 1 or 2, in which said body (i) comprises an aliphatic-aromatic diacid-diol polyester as a major component.

4. Biodegradable moulded or thermoformed article according to either of claims 1 or 2, in which said body (i) comprises, with respect to the total composition of body (i), 20 - 60% w/w of at least one aliphatic-aromatic polyester comprising 1,4-butylene dicarboxylate units; 40 - 80% w/w of at least one polyhydroxyalkanoate; optionally 0 - 0.5% w/w of a crosslinking agent and/or chain extender.

5. Biodegradable moulded or thermoformed article according to either of claims 1 or 2, in which said body (i) comprises, with respect to the total composition of body (i), 30 - 60% w/w of at least one aliphatic polyester comprising 1,4-butylene dicarboxylate units; 5 - 40% w/w of at least one polyhydroxyalkanoate; 5 - 40% w/w of at least one inorganic filler.

6. Biodegradable moulded or thermoformed article according to any one of claims 1 to 5, in which said support of barrier label (ii) comprises, with respect to the total composition of the support of barrier label (ii): 10 - 60% w/w of at least one aliphatic-aromatic polyester; 20 - 90% w/w of at least one polyhydroxyalkanoate; 0 - 10% w/w of at least one crosslinking agent and/or chain extender.

7. Biodegradable moulded or thermoformed article according to any one of claims 1 to 6, in which said polyhydroxyalkanoate of the support of barrier label (ii) is a lactic acid polyester.

8. Biodegradable moulded or thermoformed article according to any one of claims 1 to 7, in which said coating layer comprises inorganic or organic materials, possibly in combination with each other, to form mixtures or overlapping layers.

9. Biodegradable moulded or thermoformed article according to any one of claims 1 to 8, that is biodegradable in industrial composting according to standard EN 13432.

10. Biodegradable moulded or thermoformed article according to any one of claims 1 to 9, obtained by injection moulding.

## Patentansprüche

1. Biologisch abbaubarer Form- oder Thermoformartikel für Lebensmittelverpackungen, umfassend einen Körper und ein Barriereetikett, wobei:
i. der Körper mindestens einen biologisch abbaubaren Disäurediol-Polyester umfasst, der 1,4-Butylendicarboxylat-Einheiten umfasst;
ii. das Barriereetikett mindestens einen biologisch abbaubaren Träger, der aus einer Mischung eines Polyhydroxyalkanoats und mindestens aus einem aliphatischen und/oder aliphatisch-aromatischen Polyester besteht, und mindestens eine Beschichtung umfasst;
wobei das Barriereetikett (ii) durch ein In-Mold-Etikettierungsverfahren im lebensmittelberührenden Bereich mit dem Körper (i) zum Haften gebracht wird.

2. Biologisch abbaubarer Form- oder Thermoformartikel gemäß Anspruch 1, **gekennzeichnet durch** eine THF-Permeationsbarriere für Lebensmittel, wie in der Beschreibung angegeben gemessen, die doppelt so hoch ist wie die des unetikettierten Artikels.

3. Biologisch abbaubarer Form- oder Thermoformartikel gemäß einem der Ansprüche 1 oder 2, in dem der Körper (i) als Hauptkomponente ein aliphatisch-aromatisches DisäureDiol-Polyester umfasst.

4. Biologisch abbaubarer Form- oder Thermoformartikel gemäß einem der Ansprüche 1 oder 2, in dem der Körper (i), bezogen auf die Gesamtzusammensetzung des Körpers (i), 20-60 Gew.-% mindestens eines aliphatisch-aromatischen Polyesters, der 1,4-Butylendicarboxylat-Einheiten umfasst; 40-80 Gew.-% mindestens eines Polyhydroxyalkanoats; gegebenenfalls 0-0,5 Gew.-% eines Vernetzungsmittels und/oder Kettenverlängerers umfasst.

5. Biologisch abbaubarer Form- oder Thermoformartikel gemäß einem der Ansprüche 1 oder 2, in dem der Körper (i), bezogen auf die Gesamtzusammensetzung des Körpers (i), 30-60 Gew.-% mindestens eines aliphatischen Polyesters, der 1,4-Butylendicarboxylat-Einheiten umfasst; 5-40 Gew.-% mindestens eines Polyhydroxyalkanoats; 5-40 Gew.-% mindestens eines anorganischen Füllstoffs umfasst.

6. Biologisch abbaubarer Form- oder Thermoformartikel gemäß einem der Ansprüche 1 bis 5, in dem der Träger des Barriereetiketts (ii), bezogen auf die Gesamtzusammensetzung des Trägers des Barriereetiketts (ii), umfasst: 10-60 Gew.-% mindestens eines aliphatisch-aromatischen Polyesters; 20-90 Gew.-% mindestens eines Polyhydroxyalkanoats; 0-10 Gew.-% mindestens eines Vernetzungsmittels und/oder Kettenverlängerers.

7. Biologisch abbaubarer Form- oder Thermoformartikel gemäß einem der Ansprüche 1 bis 6, in dem das Polyhydroxyalkanoat des Trägers des Barriereetiketts (ii) Michlsäurepolyester ist.

8. Biologisch abbaubarer Form- oder Thermoformartikel gemäß einem der Ansprüche 1 bis 7, in dem die Beschichtung anorganische oder organische Materialen, gegebenenfalls in Kombination miteinander, umfasst, so dass Gemische oder überlappende Schichten gebildet werden.

9. Biologisch abbaubarer Form- oder Thermoformartikel gemäß einem der Ansprüche 1 bis 8, der bei der industriellen Kompostierung gemäß der Norm EN 13432 biologisch abbaubar ist.

10. Biologisch abbaubarer Form- oder Thermoformartikel gemäß einem der Ansprüche 1 bis 9, der durch Spritzgießen erhalten ist.

## Revendications

1. Article moulé ou thermoformé biodégradable pour l'emballage alimentaire comprenant un corps et une étiquette barrière, dans lequel :
i. le corps comprend au moins un polyester diacide-diol biodégradable comprenant des motifs de dicarboxylate de 1,4-butylène ;
ii. l'étiquette barrière comprend au moins un support biodégradable constitué d'un mélange comprenant un polyhydroxyalcanoate et au moins un polyester aliphatique et/ou aliphatique-aromatique, et au moins une couche de revêtement ;
lorsque ladite étiquette barrière (ii) est collée au corps (i) par un processus d'étiquetage en moule dans la partie en contact avec les aliments.

2. Article moulé ou thermoformé biodégradable selon la revendication 1, **caractérisé par** une barrière de perméation du THF vers les aliments, mesurée comme indiqué dans la description, qui est deux fois plus élevée celle de l'article non étiqueté.

3. Article moulé ou thermoformé biodégradable selon l'une des revendications 1 ou 2, dans lequel ledit corps (i) comprend un polyester diacide-diol aliphatique-aromatique en tant que composant principal.

4. Article moulé ou thermoformé biodégradable selon l'une quelconque des revendications 1 ou 2, dans lequel ledit corps (i) comprend, par rapport à la composition totale du corps (i), 20 à 60 % m/m d'au moins un polyester aliphatique-aromatique comprenant des motifs de dicarboxylate de 1,4-butylène ; 40 à 80 % m/m d'au moins un polyhydroxyalcanoate ; facultativement 0 à 0,5 % m/m d'un agent de réticulation et/ou d'un extenseur de chaîne.

5. Article moulé ou thermoformé biodégradable selon l'une quelconque des revendications 1 ou 2, dans lequel ledit corps (i) comprend, par rapport à la composition totale du corps (i), 30 à 60 % m/m d'au moins un polyester aliphatique comprenant des motifs de dicarboxylate de 1,4-butylène ; 5 à 40 % m/m d'au moins un polyhydroxyalcanoate ; 5 à 40 % m/m d'au moins une charge inorganique.

6. Article moulé ou thermoformé biodégradable selon l'une quelconque des revendications 1 à 5, dans lequel ledit support d'étiquette barrière (ii) comprend, par rapport à la composition totale du support d'étiquette barrière (ii) : 10 à 60 % m/m d'au moins un polyester aliphatique-aromatique ; 20 à 90 % m/m d'au moins un polyhydroxyalcanoate ; 0 à 10 % m/m d'au moins un agent de réticulation et/ou extenseur de chaîne.

7. Article moulé ou thermoformé biodégradable selon l'une quelconque des revendications 1 à 6, dans lequel ledit polyhydroxyalcanoate du support de l'étiquette barrière (ii) est un polyester d'acide lactique.

8. Article moulé ou thermoformé biodégradable selon l'une quelconque des revendications 1 à 7, dans lequel ladite couche de revêtement comprend des matériaux inorganiques ou organiques, facultativement en combinaison les unes avec les autres, pour former des mélanges ou des couches superposées.

9. Article moulé ou thermoformé biodégradable selon l'une quelconque des revendications 1 à 8, qui est biodégradable dans le compostage industriel selon la norme EN 13432.

10. Article moulé ou thermoformé biodégradable selon l'une quelconque des revendications 1 à 9, obtenu par moulage par injection.
